Europäisches Patentamt

European Patent Office

Office européen des brevets

(19)

(11) Veröffentlichungsnummer: **0 098 573**
**B1**

(12) # EUROPÄISCHE PATENTSCHRIFT

(45) Veröffentlichungstag der Patentschrift:
14.01.87

(51) Int. Cl.⁴: **B 23 Q 7/10**

(21) Anmeldenummer: 83106522.2

(22) Anmeldetag: 04.07.83

(54) **Werkstück-Beschickungseinrichtung.**

(30) Priorität: 06.07.82 DE 3225280

(43) Veröffentlichungstag der Anmeldung:
18.01.84 Patentblatt 84/3

(45) Bekanntmachung des Hinweises auf die Patenterteilung:
14.01.87 Patentblatt 87/3

(84) Benannte Vertragsstaaten:
CH DE FR IT LI SE

(56) Entgegenhaltungen:
DE-A-2 111 135
DE-A-2 441 095
DE-A-2 501 609
DE-A-2 535 680
DE-A-3 019 017
DE-U-1 884 275
GB-A-1 255 798

Soviet Inventions Illustrated, Week C 15, 21 May
1980, Section P 56

(73) Patentinhaber: Liebherr- Verzahntechnik GmbH,
Postfach 1960, D-8960 Kempten (DE)

(72) Erfinder: Weiss, Raphael, Parkstrasse 55, D-8960
Kempten (DE)
Erfinder: Abler, Johannes, Schleiferweg 6, D-8940
Memmingen (DE)

(74) Vertreter: Klunker, Hans- Friedrich, Dr.,
Patentanwälte Klunker . Schmitt- Nilson .
Hirsch Winzererstrasse 106, D-8000 München 40
(DE)

EP 0 098 573 B1

## Beschreibung

Die Erfindung betrifft eine Werkstück-Beschickungseinrichtung für eine Bearbeitungsmaschine gemäß dem Oberbegriff des Anspruchs 1.

Um innerhalb einer automatisierten Fertigungslinie eine hohe Auslastung der einzelnen Bearbeitungsmaschinen bzw. Werkzeugmaschinen sicherzustellen, wurden in einem Magazin Rohteile, also zu bearbeitende Werkstücke, auf Paletten geordnet aufgelegt. Die Paletten wurden zu Palettenstapeln zusammengestellt, welche ihrerseits dann durch Flurfördermittel, z. B. Gabelstapler oder Hängeförderer, z.B. Kräne, Kettenkreisförderer oder Systembahnen zu der jeweiligen Werkzeugmaschine gebracht wurden. Dort wurden von oben her die einzelnen Paletten abgenommen, die Werkzeugmaschine zugeführt und dort von einer Greifeinrichtung in die Maschine eingebracht bzw. in bearbeitetem Zustand der Maschine entnommen. Wenn alle Werkstücke einer Palette fertig bearbeitet waren, wurde diese Palette an anderer Stelle zur Bildung eines neuen Palettenstapels abgesetzt, der seinerseits dann mit den genannten Fördermitteln zur Weiterbearbeitung oder in ein weiteres Magazin abtransportiert wurde.

In diesem Falle war es erforderlich, an jeder Werkzeugmaschine Raum für zwei Palettenstapel vorzusehen. Die gattungsgemäße, bekannte (DE-OS 30 19 017) Beschickungseinrichtung benötigt stattdessen nur einen einzigen Palettenstapel, der aus einzelnen, in einen Mobilspeicher horizontal eingeschobenen und ausziehbaren Paletten gebildet ist. Dieser Mobilspeicher wird zur Bearbeitungsmaschine gebracht und dort abgesetzt. Ein Ausziehapparat ergreift dann aufeinanderfolgend die einzelnen Paletten, zieht sie aus dem Mobilspeicher aus und hebt sie zu einer über dem Mobilspeicher gelegenen Übergabestation an. An der Übergabestation wird die Palette schrittweise bzw. taktweise dann derart an einer Übergabestelle vorbeibewegt, daß die Palette jedesmal mit einem in einer Werkstückaufnahme liegenden Werkstück an einer Übergabestelle zum Stillstand kommt. An dieser Übergabestelle ergreift eine Greifeinrichtung das zu bearbeitende Werkstück, führt es der Werkzeugmaschine zu, entnimmt der Werkzeugmaschine dieses bearbeitete Werkstück und setzt es wieder in die Werkstückaufnahme ein. In einer anderen Ausführung ist es möglich, daß die Greifeinrichtung das noch nicht bearbeitete Werkstück unmittelbar gegen ein bearbeitetes Werkstück austauscht, bevor das noch nicht beaibeitete Werkstück der Werkzeugmaschine zugeführt wird. Nachdem sich die Palette taktweise an der Übergabestelle vorbeibewegt hat und nun vollständig mit bearbeiteten Werkstücken besetzt ist, wird sie von der Übergabestation entfernt, wieder zur Entnahmestelle des Mobilspeichers zurückgefördert und in diesen eingeschoben. Nachfolgend ergreift die Fördereinrichtung der Maschine die nächsthöhere oder nächsttiefere Palette, zieht sie aus dem Übergabespeicher aus und bringt sie zur Übergabestation.

Es ist bei der bekannten Einrichtung angestrebt, möglichst kurze Beschickungszeiten für die Werkzeugmaschinen zu erreichen, um möglichst intensiv genutzt werden zu können. Die Nutzung während der Beschickungszeiten ist jedoch nicht möglich. Dieser Umstand ist besonders dann gravierend, wenn die einzelnen Bearbeitungszeiten, die die Werkzeugmaschine am jeweiligen Werkstück aufwendet, sehr kurz sind, da dann die Beschickungszeiten, also die Stillstandszeiten der Werkzeugmaschine, wesentlich mehr Zeit in Anspruch nehmen als die zur Nutzung der Werkzeugmaschine zur Verfügung stehende Zeit.

Von Bedeutung ist auch die Förderzeit, die eine Palette zum Zurücklegen der Strecke zwischen Mobilspeicher und Übergabestation benötigt. Je höher der Mobilspeicher ist, desto länger ist die Zeitdauer, die die unterste Palette des Mobilspeichers benötigt, um die Strecke zwischen der Stelle, an der sie ausgezogen und eingefahren wird, zur Übergabestation und von dieser zurück zurückzulegen. Die Fördergeschwindigkeit beim Zurücklegen dieser Strecke ist durch äußere Parameter vorgegeben und kann kaum gesteigert werden. Es ergibt sich somit rechnerisch eine Mobilspeicherhöhe, bei welcher das Zuführen der untersten Palette zur Übergabestation eine längere Zeit benötigt, als sie zum Austausch eines gesamten Mobilspeichers erforderlich ist.

Die Möglichkeiten der bekannten Beschickungseinrichtung sind somit sehr begrenzt.

Die Einrichtung weist aber eine Reihe weiterer Nachteile auf:

- Die Beschickungszeiten sind unterschiedlich lang, in Abhängigkeit davon, ob die jeweils ausgezogene Palette eine längere oder kürzere Förderstrecke bis zur Übergabestation zurückzulegen hat oder nicht. Dieser Umstand erschwert die Fertigungsplanung und Fertigungsüberwachung.

- Die neben dem Mobilspeicher angeordnete Hebe- und Fördereinrichtung für die Paletten hat gerade den Raumbedarf, der durch den Verzicht auf einen Leer-Stapel eingespart werden sollte.

- Die Hebe- und Fördereinrichtung für die Palettenstapel kann nur zu diesem Zweck, nicht aber für andere Zwecke verwendet werden.

- Die Paletten weisen einfache Schienenführungen auf, mittels welchen sie in komplementären Schienen im Mobilspeicher verschieblich sind. In Abhängickeit vom Gewicht der auf der jeweiligen Palette aufgesetzten werkstücke ergibt sich somit ein erheblicher Kraftbedarf zum Ausziehen bzw. Einfahren der Paletten aus dem bzw. in den Mobilspeicher.

- Eine präzise Ansteuerung der Hebe- und Fördereinrichtung für die Paletten ist erforderlich, um das störungsfreie Aus- und Einfahren der Paletten zu gestatten.

- Die Paletten können nur in einer einzigen Orientierung aus- bzw. eingefahren werden, und zwar unabhängig davon, wie die Werkstücke auf der Palette orientiert sind. Es ist deshalb eine komplizierte, um mehrere Ebenen schwenkbare Greifeinrichtung erforderlich, um die einzelnen Werkstücke jeweils in der richtigen Orientierung der Werkzeugmaschine zuzuführen.

Die Erfindung hat die Aufgabe, die bekannte Einrichtung dahingehend weiterzubilden, daß mindestens einem Teil der genannten Nachteile abgeholfen ist. Insbesondere hat die Erfindung die Aufgabe, konstante, kürzere Beschickungszeiten für die Bearbeitungsmaschine zu erreichen, die Wirtschaftlichkeit der Einrichtung sowie der Gesamtanlage zu verbessern, eine höhere Fertigungselastizität zu erreichen, die Störanfälligkeit zu verringern, und insbesondere zu ermöglichen, daß höhere, mit mehr Paletten ausgerüstete Mobilspeicher wirtschaftlich einsetzbar sind, als dies bisher der Fall war.

Diese Aufgabe wird durch die Merkmale des Anspruchs 1 gelöst.

Der erste, wesentliche Unterschied gegenüber der bekannten Einrichtung liegt darin, daß bei der erfindungsgemäßen Einrichtung eine Hubeinrichtung mit einer Aufnahme für den Mobilspeicher zu dessen taktweisem Anheben über eine Mindesthubstrecke vorgesehen ist, die dem Abstand zwischen der obersten und der untersten Palette des Mobilspeichers entspricht, wobei die Bewegungsstrecke eines Bewegungstakts jeweils dem Abstand zwischen zwei aufeinanderfolgenden Paletten entspricht.

Die Übergabestation mit der Übergabestelle ist nicht oberhalb des Mobilspeichers, sondern in Ausfahrrichtung der einzelnen Paletten neben diesem derart angeordnet, daß beim Zurücklegen der Mindesthubstrecke der Mobilspeicher jeweils mit jeder seiner Paletten neben der Übernahmestation derart zum Stillstand gelangt, daß jede der Paletten unmittelbar auf die Übergabestation ausfahrbar ist.

Der dritte Unterschied gegenüber der gattungsbildenden Einrichtung besteht darin, daß die Auszieheinrichtung, welche bei stillstehendem Mobilspeicher die jeweilige Palette ergreift, dazu eingerichtet ist, diese dann taktweise an der Übergabestelle vorbeizubewegen.

Es ist bei der erfindungsgemäßen Einrichtung nur erforderlich, jede der Paletten aus- bzw. einzufahren. Das anschliessende Umsetzen der Paletten, wie es bei der bekannten Einrichtung erforderlich ist, ist nicht notwendig. Es wird bei der erfindungsgemäßen Einrichtung jeder der schubladenartigen Paletten von der Auszieheinrichtung entweder taktweise ausgezogen und dann wieder eingefahren oder ausgezogen und dann taktweise wieder eingefahren, wobei jede der Werkstückaufnahmen der Palette zwischen zwei Bewegungstakten an der Übergabestelle zum Stillstand kommt. Die Greifeinrichtung, deren Zuordnung zur Übergabestelle stets unverändert bleibt, ergreift jedes der Werkstücke wie bei der bekannten Einrichtung, führt es der Werkzeugmaschine zu, entnimmt es dieser und führt es wieder zur Übergabestelle zurück, wo es in eine der Werkzeugaufnahmen abgelegt wird.

Sind alle werkstücke einer Palette bearbeitet und ist die Palette wieder eingefahren, dann bewegt sich der Mobilspeicher in vertikaler Richtung um den Abstand zwischen der genannten und der nächstfolgenden Palette weiter, welche ihrerseits wieder von der Auszieheinrichtung ergriffen wird.

Die obengenannte Hebe- und Fördereinrichtung zum Umsetzen der Paletten entfällt bei der erfindungsgemäßen Einrichtung vollständig, so daß der hierfür vorgesehene Raum auch vollständig eingespart werden kann. Ferner entfallen auch die für die Vertikalförderung der ausgezogenen Paletten erforderlichen Förderzeiten, so daß nicht nur ein beliebig hoher Mobilspeicher verwendet werden kann, sondern die zum Umwechseln von einer Palette auf die nächstfolgende erforderlichen Zeiten sind einander völlig gleich, vorausgesetzt, die vertikalen Abstände zwischen den einzelnen Paletten sind gleich.

Der Raum über oder unter dem Mobilspeicher ist lediglich von der zu dessen Vertikalbewegung vorgesehenen Hubeinrichtung begrenzt, welche den jeweils anliegenden Erfordernissen entsprechend ausgelegt werden kann. Es ist daher möglich, die Einrichtung derart auszubilden, daß der Mobilspeicher von oben, unten oder in horizontaler Richtung zugeführt bzw. abgefahren werden kann. Ferner ist die Greifeinrichtung nicht mehr oberhalb, sondern neben dem Mobilspeicher angeordnet. Bei entsprechender Auslegung kann der Mobilspeicher daher in einem Winkelbereich von mindestens 180° horizontal angefahren bzw. abgefahren werden.

Während die bekannte Hebe- und Fördereinrichtung unterschiedliche Positionen am Mobilspeicher einerseits und eine ortsfeste Position andererseits stets mit hoher Genauigkeit anfahren mußte, muß bei der erfindungsgemäßen Einrichtung nur noch der Mobilspeicher seinerseits mit seinen Paletten jeweils eine feste Position anfahren, so daß der Aufwand zur Steuerung verringert werden kann.

Die erfindungsgemäße Einrichtung sorgt somit für eine konstantere Auslastung der Werkzeug- bzw. Bearbeitungsmaschine und somit für deren höheren Nutzungsgrad, liefert eine höhere Fertigungselastizität, eine geringere Störanfälligkeit sowie, wie aus dem weiteren noch hervorgehen wird, auch reduzierte Umrüstungsaufwendungen.

Der Mobilspeicher kann in eine unter der Hallendecke angebrachte Hubeinrichtung von unten her eingehängt werden; hierbei kann diese Hubeinrichtung gleichzeitig einen Teil einer unterhalb der Hallendecke angebrachten Systembahn bilden. Gemäß einer Ausgestaltung der Erfindung ist es aber von Vorteil, daß die Hubeinrichtung der Beschickungseinrichtung jeweils ortsfest zugeordnet ist und den Mobilspeicher von unten her abstützt; diese mit einer Aufnahme für den Mobilspeicher versehene Hubeinrichtung kann daher beim Absenken des Mobilspeichers mit einfachen Einrichtungen versehen werden, um diesen ohne weiteres zu zentrieren, so daß durch diese Maßnahme mit einfachen Mitteln ein noch störungsfreierer Betrieb erreicht wird.

Gemäß einer weiteren Ausgestaltung der Erfindung ist die Hubeinrichtung zu einer Vertikalbewegung des Mobilspeichers eingerichtet, die größer ist als die Mindesthubstrecke und die bis an die Umsetzstation eines Förderers zum Heranbringen und Fortschaffen der Mobilspeicher heranreicht. Hierbei kann durch eine einfache Steuerung die Hubeinrichtung nach Zurücklegen der genannten Mindesthubstrecke selbsttätig die genannte Umsetzstation anfahren und dort ein Signal auslösen, welches den Förderer in Funktion setzt. Die Umsetzstation kann gegebenenfalls auch innerhalb der Mindesthubstrekke liegen, z. B. dann, wenn der Mobilspeicher auf ein Flurfördermittel wie etwa einen Gabelstapler umgesetzt werden soll. Bevorzugt ist jedoch die Hubeinrichtung dazu eingerichtet, nach Zurücklegen der Mindesthubstrecke den Mobilspeicher bis an eine über Kopf angeordnete Hängebahn heranzubringen, wo er ergriffen und gegen einen neuen Mobilspeicher ausgetauscht werden kann. Es erübrigt sich somit bei der Verwendung der erfindungsgemäßen Einrichtung ein gesondertes Hebezeug, das sonst erforderlich wäre, um den Mobilspeicher in die Förderebene anzuheben.

Wenn man davon ausgeht, daß die Paletten mit einer festliegenden Grundteilung im Mobilspeicher angeordnet sind, bestünde eine besonders einfache und somit auch billige Steuerung darin, die Hubeinrichtung dazu einzurichten, daß sie in jeder Vertikalrichtung stets den Mobilspeicher nur in Fördertakten bewegt, welche der genannten Teilung entsprechen. Um eine weitere Verkürzung der Beschickungszeit zu erzielen, ist jedoch gemäß einer weiteren Ausgestaltung der Erfindung vorgeschlagen, daß die Hubeinrichtung zur getakteten Vertikalbewegung nur in einer Richtung und nur innerhalb der Mindesthubstrecke eingerichtet ist. Die Bewegung in Gegenrichtung, sei es vor oder nach der Bearbeitung der Werkstücke, sowie die Bewegung außerhalb der Mindesthubstrecke erfolgt mit der aufgrund der Randbedingungen zulässigen Höchstgeschwindigkeit ohne Unterbrechung.

Gemäß einer weiteren Ausgestaltung der Erfindung ist die Hubeinrichtung zur getakteten Vertikalbewegung nur in Aufwärtsrichtung eingerichtet. Einer der Vorteile dieser Ausgestaltung liegt darin, daß die Oberhalb der Übergabestation liegenden Systempaletten, die frei zugänglich sind, bereits fertig bearbeitete Werkstücke enthalten, welche dann durch eine Kontrollperson zur Lehrenkontrolle oder dergleichen ohne weiteres entnommen werden können. Außerdem ist es möglich, bei laufender Fertigung, ohne diese zu beeinträchtigen, in den laufenden Produktionsvorgang einzugreifen und bereits bearbeitete Werkstücke aus dem Mobilspeicher zu entfernen.

Es kann im Einzelfall zweckmäßig sein, die Hubeinrichtung durch einen Systemrechner anzusteuern, der auch die nachgeschalteten Einrichtungen bzw. Maschinen sowie die Gesamtanlage, der diese angehören, steuert. Gemäß einer weiteren Ausgestaltung der Erfindung ist es aber von Vorteil, daß der Mobilspeicher seinerseits die Hubeinrichtung ansteuert. Diese Weiterbildung bringt den Vorteil, daß unterschiedliche Mobilspeicher verwendet werden können, ohne daß dieser Umstand in einem Prozeßrechner für die Gesamtanlage berücksichtigt zu werden braucht. Es kann im Falle von Störungen auch unmittelbar in den Steuerablauf eingegriffen werden, ohne daß hierdurch größere regeltechnische Systeme in Unordnung geraten.

Es ist im Prinzip möglich, am Mobilspeicher eine diesen kennzeichnende Kodierung anzubringen. Gemäß einer weiteren Ausgestaltung der Erfindung aber trägt im Hubspeicher jede der Paletten ein erstes Steuerglied, welches zum Ansteuern der Hubeinrichtung vorgesehen ist. Es ist nämlich möglich, daß in einem Mobilspeicher nicht alle Speicherstellen einer Palette besetzt sind. Dies ist dann der Fall, wenn die Speicherkapazität die für die zu bearbeitenden Werkstücke erforderliche Kapazität überschreitet. Es ist aber auch möglich, daß bei übermäßiger Höhe der zu bearbeitenden Werkstücke nicht jeder Speicherplatz des Mobilspeichers mit einer Palette besetzt werden kann. In jedem dieser Fälle muß nicht etwa im Magazin bei Beschicken des Mobilspeichers eine entsprechende Kodierung an diesem angebracht werden, sondern das Vorliegen oder Nichtvorliegen einer Palette bestimmt durch das der Palette zugeordnete Steuerglied völlig selbständig und fehlerfrei die ordnungsgemäße Kodierung des Mobilspeichers.

Es gibt eine groß Anzahl von Möglichkeiten, wie das Steuerglied realisiert werden könnte. Beispielsweise kann ein blanker Oberflächenabschnitt der Palette einen Meßlichtstrahl reflektieren; es kann auch ein Teil der Palette, wenn sie ordnungsgemäß im Speicher angeordnet ist, einen Meßlichtstrahl unterbrechen. Das Vorhandsein oder Fehlen einer Palette kann auch durch eine ortsfeste Induktionsspule festgestellt werden. Gemäß einer weiteren Ausgestaltung der Erfindung liegt aber eine besonders einfache und störungsarme Ausführung darin, daß das genannte, erste Steuerglied ein auf einen ortsfesten Steuerschalter einwirkender, an jeder Palette angebrachter Vorsprung ist. Ein derartiger Vorsprung kann durch einen eingenieteten Stift, eine eingestanzte und ausgebogene Lasche oder dergleichen gebildet sein. Eine derartige Steuerung kann auch auf besonders einfache Weise überprüft werden. Im übrigen ist eine derartige Steuerung gegenüber Verschmutzung und sonstigen, äußeren Störungen besonders unanfällig.

Bei der eingangs genannten, bekannten Einrichtung sind die als Schubladen ausgebildeten Paletten in den Mobilspeicher eingeschoben. Wenn ein derartiger Mobilspeicher mit einem Gabelstapler über einen schräg verlaufenden, unebenen Boden gefördert wird, dann ist es möglich, daß infolge der Schräglage des Speichers und infolge von Fahrbahnstößen einzelne Paletten mindestens teilweise ausfahren. Werden diese Paletten nicht wieder völlig eingeschoben, dann können sich erhebliche Betriebsstörungen ergeben, die den Betriebsablauf verzögern. Um einen möglichst ungestörten und somit raschen Betriebsablauf zu gewährleisten, ist gemäß einer weiteren Ausführungsform der Erfindung im Hubspeicher für jede Palette eine Ausziehsperre vorgesehen, die im Betrieb erst durch den Ausziehapparat lösbar ist. Diese Maßnahme ermöglicht unter anderem auch die Verwendung außerordentlich hoher Mobilspeicher, bei deren Translationsförderung auch erhebliche Querschwingungen auftreten können, die sonst geeignet wären, die einzelnen schubladenartigen Paletten aus ihren Führungen zu schütteln.

Wenn der Ausziehapparat zu seiner getakteten Bewegung unabhängig von der tatsächlichen Position der jeweiligen Palette angesteuert wird, ist es außerdem möglich, daß dann, wenn der Ausziehapparat diese Palette nur unzulänglich ergriffen hat, sie außerstande ist, mit ihren Werkzeugaufnahmen die übergabestelle präzise anzufahren. In diesem Falle ergreift die Greifeinrichtung das jeweilige Werkstück nicht oder nur unvollkommen. Mindestens Betriebsstörungen, wahrscheinlich auch Beschädigungen können die Folge einer derartigen Störung sein. Die Ausziehsperre kann aber so ausgebildet sein, daß sie die jeweilige Palette zum Ausziehen erst dann freigibt, wenn der Ausziehapparat in diese Palette vollständig eingekuppelt ist. Hierdurch werden solche Betriebsstörungen vermieden.

Als Ausziehsperre kann eine durch den Ausziehapparat betätigbare, rein formschlüssige Verriegelung vorgesehen sein. Gemäß einer weiteren Ausgestaltung der Erfindung ist die Ausziehsperre jedoch als eine durch die Ausziehkraft eines Ausziehapparates überwindbare Rasteinrichtung ausgebildet; wenn der Ausziehapparat nicht vollständig in die Palette eingeklinkt ist, ist er außerstande, die zum überwinden der Rast erforderliche Kraft auf die Palette zu übertragen. Außerdem kann eine derartige Palette bei entsprechender Einstellung der Rast jederzeit von Hand entfernt werden. Dies ist beim Be- und Entladen des Mobilspeichers, aber auch bei der Entnahme von Stichproben während des laufenden Betriebes vorteilhaft.

Das Ausziehen der Palette kann, wie auch die Vertikalbewegung des Mobilspeichers, über eine Zentralsteuerung erfolgen. Es ist jedoch aus den gleichen Gründen wie auch bei der Ansteuerung der Hubeinrichtung von Vorteil, daß gemäß einer weiteren Ausgestaltung der Erfindung jeder der jeweiligen Paletten eine Einrichtung zum Ansteuern des Ausziehapparates unmittelbar zugeordnet ist. Eine derartige Einrichtung kann wiederum aus einer Kodierung bestehen, welche in erster Linie die Position des Werkstückes umfassen kann. Gemäß einer weiteren Ausgestaltung der Erfindung sind aber zweite Steuerglieder jeweils in Zuordnung zu den Werkzeugaufnahmen angeordnet, die auf eine ortsfeste Einrichtung zum Ansteuern des Ausziehapparates einwirken. Auch diese Steuerung kann optisch oder induktiv ausgeführt sein, wie dies bereits oben im Zusammenhang mit der Ansteuerung der Hubeinrichtung erwähnt wurde; gemäß einer bevorzugten Ausgestaltung der Erfindung ist aber das zweite Steuerglied jeweils als Vorsprung ausgebildet, der als eingenieteter Stift, eingestanzte und ausgebogene Lasche oder dergleichen ausgebildet ist, und die Einrichtung zum Ansteuern des Ausziehapparates ist als einfacher Berührungs- oder Endschalter ausgebildet.

Um zusätzlich Leerlaufzeiten zu vermeiden, ist jeweils jenes Steuerglied, das einer nicht durch ein Werkstück besetzten Werkstückaufnahme zugeordnet ist, unwirksam. Diese erfindungsgemäße Maßnahme kann beispielsweise dadurch herbeigeführt werden, daß in dem Stromkreis des von einem Vorsprung betätigten Steuerschalters eine Lichtschranke derart eingeschaltet ist, daß die Bewegung des Ausziehapparates erst dann unterbrochen wird, wenn gleichzeitig der Steuerschalter durch den Vorsprung betätigt und die Lichtschranke durch das in der Werkstückaufnahme liegende Werkstück unterbrochen wird.

Wie es bei der Bewegung der Hubeinrichtung möglich ist, so kann auch der Ausziehapparat durch eine feste Ansteuerung stets taktweise in Bewegungsschritten bewegt werden, welche dem Abstand der einzelnen Werkstückaufnahmen zueinander entsprechen. Gemäß einer Ausgestaltung der Erfindung ist es aber besonders von Vorteil, daß der Ausziehapparat nur während der Ausziehbewegung getaktet bewegbar ist. Die Einfahrbewegung erfolgt demnach ohne Unterbrechung. Dies bedeutet nicht nur eine Zeitersparnis, sondern liefert auch den Vorteil, daß auf dem ausgezogenen Teil der Palette, der beim Betrieb der erfindungsgemäßen Einrichtung auf der vom Mobilspeicher abgewandten Seite der übergabestelle liegt, die bereits bearbeiteten Werkstücke in ihrer Aufnahme liegen. Diese, gerade erst bearbeiteten Werkstücke sind ohne weiteres zugänglich und können für Zwischenkontrollen entnommen und nach der Zwischenprüfung wieder zurückgelegt werden, ohne daß der Fertigungsablauf in irgendeiner Weise beeinträchtigt wird. Somit ist die stets erforderliche Kontrolle der Werkstücke unmittelbar nach ihrer Fertigung durch eine Aufsichtsperson oder durch eine nachgeschaltete, automatische Prüfeinrichtung möglich, ohne daß deshalb ein Eingriff in den Mobilspeicher erforderlich wäre.

Bei dem bekannten Mobilspeicher ist es wegen des überganges von der ruhenden Reibung zur gleitenden Reibung nur mit großem Aufwand möglich, die Paletten um präzise bemessene Strecken auszuziehen. Um die präzise getaktete Horizontalbewegung der Paletten bei der erfindungsgemäßen Einrichtung zu erleichtern, sind gemäß einer bevorzugten Ausgestaltung der Erfindung an den Paletten Laufrollen angebracht, die in Führungen am Mobilspeicher aufgenommen sind. Dieses Merkmal ermöglicht aber zusätzlich eine besonders einfache Verrastung der Paletten im Mobilspeicher dadurch, daß an jenen Stellen, die die Laufrollen bei völlig eingeschobener Palette einnehmen, in den zugeordneten Führungen Vertiefungen angeordnet sind.

Bei der bekannten Einrichtung sind die Paletten, wie auch bei früheren, bekannten Einrichtungen, im Grundriß rechteckig, d. h., sie weisen eine paarweise ungleiche Kantenlänge auf. Die Werkstückaufnahmen sind - je nach Werkstückgröße - in Längs- oder Querrichtung der Hauptachse der Paletten angeordnet. Die Greifeinrichtung, die die Werkstücke an der übergabestelle ergreift, muß nun zur Orientierung der Werkstücke passen ausgerichtet werden und ist demzufolge um mehrere Achsen schwenkbar anzuordnen. Hierbei bedeutet jede der Schwenkachsen nicht nur einen baulichen und regelungstechnischen Aufwand, sondern auch einen Zeitverlust.

Obwohl in den meisten Verwendungsfällen ein rechteckiger Palettengrundriß vorteilhaft ist, kann gemäß einer Ausgestaltung der Erfindung dieser Grundriß auch quadratisch sein ; in diesem Falle kann die Palette längs jeder ihrer Hauptachsen in den Mobilspeicher eingeschoben werden, und es ist somit möglich, diese Palette stets derart in den Mobilspeicher einzuschieben, daß die Werkstücke in Querrichtung zur Ausrichtung der Paletten orientiert sind. Dementsprechend kommen alle Werkstücke an der übergabestelle in einer streng definierten Ausrichtung an, so daß die Greifeinrichtung auf eine ihrer Schwenkachsen verzichen kann, bzw. eine Bewegung der Greifeinrichtung um diese Schwenkachse zumindest an der übergabestelle nicht erforderlich ist. Dieses Merkmal erzielt somit nicht nur eine noch weitere Zeitersparnis, sondern auch eine Minderung des baulichen Aufwandes und hiermit eine Verminderung der Störanfälligkeit. Die quadratischen Paletten weisen an allen ihren Kanten Laufrollen auf, welche derart ausgerichtet sind, daß die Palette in jeder ihrer Hauptrichtungen in die Führungen des Mobilspeichers eingeschoben werden kann.

Gemäß einer weiteren Ausgestaltung der Erfindung weisen die Paletten beiderseits einen tragenden Längs-Profilstab auf, und die Profilstäbe sind an Achsen befestigt, welche sich quer zur Ausziehrichtung der Paletten erstrecken und an ihren Enden gegebenenfalls auch die Laufrollen tragen können. Bevorzugt sind diese jedoch getrennt am Längs-Profilstab befestigt. Die derart geschaffene Palette ist hinreichend steif, aber wesentlich leichter, wenn man sie mit der bekannten Auszieh-Palette vergleicht, da die bekannte Palette beim Ausziehen gleitende Reibung überwinden muß und somit einer ruckenden und stoßartigen Belastung standhalten muß. Bei der erfindungsgemäßen Einrichtung tritt beim Ausziehen der Paletten lediglich rollende Reibung auf. Die leichte Bauausführung der erfindungsgemäßen Weiterbildung ermöglicht andererseits aber wiederum die Errichtung höherer Mobilspeicher bei Nutzung gleichbleibender Fördermittel.

Die erfindungsgemäße Einrichtung beschickt eine Bearbeitungsmaschine mit Werkstücken, welche unterschiedliche Größe aufweisen können. Zu diesem Zweck müssen entweder unterschiedliche Paletten mit jeweils unterschiedlichen Werkstückaufnahmen vorgesehen sein oder Paletten, deren Werkstückaufnahmen das Einlegen unterschiedlich großer Werkstücke gestatten. Aus Gründen der Standardisierung ist eine Palette des letztgenannten Typs vorteilhaft, hat aber den Nachteil, daß bei Anordnung mehrerer, hintereinander liegender, fester Werkstückaufnahmen beim Einsetzen großer Werkstücke einige dieser Aufnahmen ungenutzt bleiben und außerdem der gegenseitige Abstand der Werkstücke vom Abstand der Aufnahmen bestimmt ist, so daß die Paletten nicht immer optimal beladen werden können. Diesen Nachteilen hilft eine weitere Ausgestaltung der erfindungsgemäßen Palette dadurch ab, daß die sich quer zu den Längs-Profilstäben erstreckenden Werkstückaufnahmen an diesen lösbar befestigt sind und mithin auch an unterschiedlichen, jeweils möglichst optimal gewählten Stellen anbringbar sind. Hiermit wird bei einer Beladung einer Palette im Werkstückmagazin auch die Anzahl der gewählten Werkstückaufnahmen bestimmt, wodurch wieder das Gewicht der Palette verringert wird und somit zur Bildung hoher Mobilspeicher beiträgt.

Zum Erleichtern des entsprechenden Einsetzens der Werkstückaufnahmen in die Paletten weisen die Längs-Profilstäbe an ihren aneinander zugewandten Seiten jeweils eine mit einer Reihe von Positionierungskerben versehene Auflageleisten zum Einsetzen der Werkstückaufnahmen auf, wobei diese an jedem Ende einen Vorsprung zum Eingriff in je eine der Positionierungskerben aufweisen. Es ist somit möglich, Palettenrahmen und Werkstückaufnahmen beliebig zusammenzusetzen und zu trennen; das Einsetzen der Werkstückaufnahmen zusammen mit den Werkstücken kann gegebenenfalls maschinell erfolgen. Hierbei sind bevorzugt an den einander zugewandten Seiten zweier aufeinanderfolgender Werkstückaufnahmen Anschlagleisten oder -flächen vorgesehen, welche derat in Zuordnung zu den Positionierungskerben angeordnet sind, daß zwei aneinander anstoßende Werkstückaufnahmen mit ihrem Vorsprung bzw. ihren Vorsprüngen in Positionierungskerben einsetzbar sind.

Gemäß einer weiteren Ausgestaltung der Erfindung ist der Vorsprung, der zur Befestigung der Werkstückaufnahme in den Positionierungskerben dient, verlängert und zum Eingriff mit dem Schalter zum Ansteuern des Ausziehapparates eingerichtet. Dieser Vorsprung, der bevorzugt als eingestanzte und nach unten gebogene Zunge ausgebildet ist, übt somit nicht nur in vorteilhafter und kostensparender Weise eine Doppelfunktion aus, sondern da die Werkstückaufnahmen auswechselbar sind und nur dann angebracht werden, wenn sie mit Werkstücken besetzt werden, wird somit der Ausziehapparat derart angesteuert, daß die gerade ausgezogene Palette nur mit einem Werkstück an der Übergabestelle zum Stillstand kommt, nicht aber mit einer Leerposition.

Gemäß einer weiteren Ausgestaltung sind die Werkstückaufnahmen als nach oben offenes Winkelprofil ausgebildet, dessen Flanken zur Auflage auf den Längs-Profilstäben umgebogen sind. Diese umgebogenen Kanten verleihen gleichzeitig dem Winkelprofil die erforderliche Biegefestigkeit, um auch große und schwere Werkstücke zu tragen. Gleichzeitig sorgt das Winkelprofil, das eine Aufnahmerille bildet, dafür, daß jedes einmal eingelegte Werkstück selbsttätig mit ausreichender Genauigkeit eine zentrische Position annimmt, um durch einen Greifer aufgenommen und weitergefördert zu werden. Das Absetzen des Werkstückes durch diesen Greifer braucht jedoch nicht mit hoher Genauigkeit zu erfolgen, da durch die zentrierende Wirkung des Winkelprofiles das Werkstück selbsttätig wieder in die ordungsgemäße Lage gelangt.

Die umgebogenen Flanken des Winkelprofiles stützen sich bevorzugt mit ihren Enden auf den die Positionierungskerben aufweisenden Leisten ab.

Die erfindungsgemäßen Werkstückaufnahmen sind somit als Preß- und Stanzteile einfach und billig aber mit großer Genauigkeit und Festigkeit herstellbar.

Die Werkstückaufnahmen sind derart angeordnet, daß die Werkstücke jeweils quer zur Auszugrichtung der Paletten liegen. Hierbei kann es vorteilhaft sein, wenn die Werkstücke in einer einzigen Reihe angeordnet sind, welche parallel zur Ausziehrichtung der Palette verläuft. Gemäß einer weiteren Ausgestaltung der Erfindung ist es aber vorteilhaft, in jeder Werkstückaufnahme mindestens zwei Werkstücke nebeneinanderliegend derart anzuordnen, daß diese Werkstücke mehrere, zueinander parallele Reihen bilden. Für derartige Paletten ist allerdings ein Ladegerät erforderlich, welches in Längsrichtung der Werkstückaufnahmen verschiedene Positionen haben kann, die jeweils einem Werkstück entsprechen. Der besondere Vorteil dieser Ausgestaltung der Erfindung liegt darin, daß bei der Bearbeitung verhältnismäßig kleiner Werkstücke die zur Beschickung erforderlichen Zeiten noch weiter verkürzt werden, weil die Aufnahmekapazität des Mobilspeichers noch besser genutzt ist.

Gemäß einer weiteren Ausgestaltung der Erfindung sind die einzelnen Werkstückpositionen, welche nebeneinanderliegend an einer Werkstückaufnahme vorgesehen sind, voneinander durch Distanzleisten getrennt, welche in Ausziehrichtung der Palette verlaufend angebracht sind. Diese Distanzleisten können in vorteilhafter Weise von einem dem Greifer des Ladegerätes zugeordneten Taster abgegriffen werden oder können, wie auch die Werkstückaufnahmen, mit besonderen Vorsprüngen zum Ansteuern eines Endschalters ausgebildet sein. Hierbei ist die obere Kontur der Distanzleisten ähnlich oder gleich der oberen Kontur der Längs-Profilstäbe ausgebildet, wobei diese ebenfalls zum Ansteuern des Greifers herangezogen werden können.

Die Distanzleisten sind bevorzugt an den Achsen der Laufrollen befestigt und übergreifen die Werkstückaufnahmen, so daß diese auch bei Erschütterungen nicht aus ihren Halterungen im Palettenrahmen springen können. Gleichzeitig wird durch die Distanzleisten, die fest an den Achsen befestigt sind, die Palette gegenüber Verformungen noch besser ausgesteift, so daß sie beim Transport höheren Beschleunigungen ausgesetzt werden kann, als dies sonst der Fall wäre. Damit werden aber gleichzeitig die Förderzeiten verringert und somit ein weiterer Beitrag zum raschen und kostengünstigen Beschicken einer Bearbeitungsmaschine geleistet.

Um die Gesamtanlage zu verbilligen, sollten die Paletten aus möglichst wenigen, ohne weiteres auswechselbaren Standardteilen bestehen. Hierdurch wird zunächst die Zusammenstellung der Paletten in Zuordnung zu bestimmten Werkstücken erleichtert. Es ist aber auch möglich, beschädigte Paletten durch Austausch weniger Standardteile zu reparieren bzw. zu Ersatzteilen zur Reparatur anderer Paletten zu zerlegen. Daher weist gemäß einer weiteren Ausgestaltung der Erfindung die Palette an an den Achsen anbringbare Befestigungsklötze auf, die ein Standardteil bilden. Sowohl die Längs-Profilstäbe als auch die Distanzleisten sind jeweils derart ausgebildet, daß sie einfach und rasch an den Befestigungsklötzen anbringbar sind. Diese Befestigungsklötze weisen bevorzugt Klemmeinrichtungen wie Klemmschrauben auf, mittels welcher sie in jeder Position auf der Achse befestigt werden können, aber ohne weiteres und rasch wieder abgenommen werden können, wenn sie nicht mehr benötigt sind.

Gemäß einer anderen Ausgestaltung der Erfindung sind die Werkstückaufnahmen an den einander zugewandten Seitenflanken von Distanzstäben in Form von Vorsprüngen ausgebildet. Die Distanzstäbe werden, wie bereits oben beschrieben, mittels Befestigungsklötzen an den Achsen angebracht, und zwar mit einem solchen gegenseitigen Abstand, daß zwischen den einander zugewandten, in den Seitenflanken ausgebildeten Vorsprüngen genau die Werkstücke eingehängt werden können.

Während sich die genannten, einsetzbaren, muldenförmigen Werkstückaufnahmen besonders für eine flexible Fertigung unterschiedlicher Teile eignen, sind die zuletzt beschriebenen Paletten besonders für die Massenfertigung von zylinderförmige Werkstücke oder dergleichen geeignet. Da die Werkstückaufnahmen lediglich von Vorsprüngen gebildet sind, die an den Distanzstäben ausgestanzt sind, sind für die Werkstückaufnahmen keine gesonderten Teile erfoderlich. Die Palette bildet vielmehr lediglich einen Rahmen, in welchen die Werkstücke eingelegt werden können. Die Palette weist somit ein ganz besonders geringes Gewicht auf, wodurch die Verwendung größerer Paletten und höherer Mobilspeicher ermöglicht wird.

Gemäß einer weiteren Ausgestaltung der Erfindung ist die Hubeinrichtung zum taktweisen Anheben bzw. Absenken des Mobilspeichers derart ausgebildet, daß dieser mit einer an seiner Oberseite ausgebildeten Aufnahme in die Hubeinrichtung eingehängt werden kann. Da somit der Mobilspeicher nicht von unten her untergriffen wird, kann die ganze Höhe zwischen Hallenboden und Übergabestation für die gestapelte Anordnung von Paletten genutzt werden, was die Speicherkapazität noch weiter steigert.

Die Erfindung wird anhand von Ausführungsbeispielen nachfolgende noch näher beschrieben. Es zeigen:

Fig. 1 eine erfindungsgemäße Einrichtung, die an einer Werkzeugmaschine angeordnet ist,

Fig. 2 einen auf einem Flurfördermittel aufgesetzten Mobilspeicher, wie er in Fig. 1 gezeigt ist,

Fig. 3 einen Palettenstapel, der Paletten eines anderen Ausführungsbeispiels der Erfindung enthält,

Fig. 4 eine Einzelpalette des Stapels in Fig. 3,

Fig. 5 einen Teilschnitt in vergrößertem Maßstab durch eine andere Ausführungsform einer erfindungsgemäßen Palette,

Fig. 6 den Zusammenbau der in Fig. 5 gezeigten Palette, in Explosionsdarstellung,

Fig. 7 eine Draufsicht auf ein anderes Ausführungsbeispiel einer erfindungsgemäßen Beschickungseinrichtung, und

Fig. 8 eine Seitenansicht der in Fig. 7 gezeigten Einrichtung.

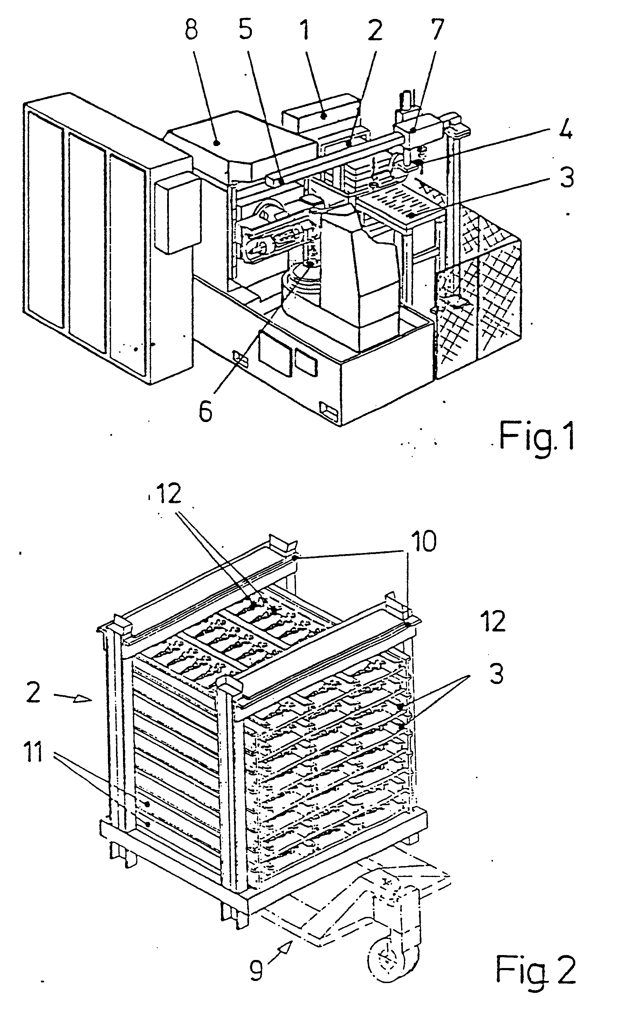

In Fig. 1 ist die erfindungsgemäße Werkstück-Beschickungseinrichtung zusammen mit einer Werkzeugmaschine gezeigt.

Die Beschickungseinrichtung weist einen Mobilspeicher 2 auf, der auf einer Hubeinrichtung 1 abgesetzt ist, die neben einer Werkzeugmaschine 8 angeordnet ist. Durch ein in der Fig. nicht gezeigte Auszieheinrichtung ist eine Palette 3 auf eine Übergabestation aufgeschoben, welche unterhalb eines Greiferportals 5 angeordnet ist, welches eine übergabestelle der Übergabestation und eine Aufnahme 6 der Werkzeugmaschine 8 überspannt.

Am Greiferportal 5 ist ein Greiferträger 7 verschieblich angeordnet, welcher von der Übergabestelle zur Maschinenaufnahme 8 verfahrbar ist.

An der Unterseite des Greiferträgers 7 sind um eine horizontale Achse schwenkbar zwei Greifer 4 vorgesehen, welche in der Fig. jeweils ein Werkstück tragen.

Diese Greifer sind dazu eingerichtet, ein Rohteil aus einer Werkstückaufnahme zu ergreifen, um 180° zu schwenken,,ein Fertigteil in der Werkzeugaufnahme abzulegen und mit dem Rohteil zur Maschinenaufnahme 6 zu fahren, wo das Fertigteil aus der Maschinenaufnahme 6 entnommen wird, um 180° geschwenkt wird, das Rohteil in der Maschinenaufnahme abgelegt wird und in der Maschine 8 weiterbearbeitet wird.

Wie in der Zeichnung gezeigt, ist vom Mobilspeicher 2 bis zum Maschinenbrett ein Schutzzaun gezogen, der verhindert, daß Personal von den sich bewegenden Greifern 4 verletzt wird.

In der Fig. weist die Hubeinrichtung 1 eine Stützwand auf, die an der von der übergabestation abgewandten Seite des Mobilspeichers 2 angeordnet ist und dazu beiträgt, daß der Mobilspeicher 2 mit der erforderlichen Genauigkeit taktweise angehoben wird. Die Hubeinrichtung 1 kann auch vor dem Greiferportal 6 stehen. Die getaktete Hubbewegung des Mobilspeichers 2 erfolgt überdessen Mindesthubstrecke hinweg, welche dem Abstand seiner obersten und untersten Palette 3 entspricht. Wenn der Mobilspeicher 2 an der oberen Grenze der Mindesthubstrecke angelangt ist, dann wird er entweder nach oben weiter bis zur übernahme durch einen (nicht gezeigten) Deckenförderer angehoben, oder ohne Bewegungsunterbrechung wieder auf das unterste Niveau abgesenkt, um von einem Flurfördermittel wie beispielsweise einem Gabelstapler erfaßt zu werden.

In Fig. 2 ist der Mobilspeicher 2 noch deutlicher dargestellt.

Der Mobilspeicher 2 ruht auf einem nur schematisch dargestellten Flurfördermittel 9 und ist von zwei aufeinander fluchtend ausgerichteten Vertikalrahmen 10 gebildet, welche durch übereinanderliegende Horizontalführungen 11 miteinander verbunden sind, welche ihrerseits als U-Profile ausgebildet sind. In den Horizontalführungen 11 laufen auf Rollen die Paletten 3 derart, daß sie in Fluchtrichtung der Vertikalrahmen 10 ausziehbar sind.

Quer zur Bewegungsrichtung sind in Werkstückaufnahmen innerhalb der Paletten 3 Werkstücke 12 angeordnet.

Die gezeigten Paletten 3 sind von zwei zueinander parallelen Längs-Profilstäben 15 gebildet, welche durch querverlaufende Achsen miteinander verbunden sind. Die Achsen 14 durchdringen die Längs-Profilstäbe 15. An den Stellen 13 sind in der Zeichnung nicht gezeigte Laufrollen angebracht.

Die Längs-Profilstäbe 15 weisen an ihrer Ober- und Unterseite horizontal vorspringende Längsleisten auf, welche das Stapeln der Paletten 3 aufeinander ermöglichen, Führungen zum Einschieben der Paletten 3 in einen Mobilspeicher 2 (Fig. 1 und 2) bilden und außerdem die Laufrollen vor Beschädigungen schützen, wenn die Paletten 3 nicht in einem Mobilspeicher 2 eingesetzt sind.

Auf die Achsen 14 sind Befestigungsklötze 17 aufgesetzt und mit vorbestimmtem, gegenseitigem Abstand zueinander befestigt. Auf die Befestigungsklötze 17 sind Distanzstäbe 16 aufgesetzt und festgeschraubt. Diese Distanzstäbe 16 werden von einem nach unten offenen Rechteck-Hohlprofil gebildet, in dessen Seitenflanken mit gleichem Abstand zueinander angeordnete Aufnahmevorsprünge 18 aufgestanzt sind. In jeweils zwei einander gegenüberliegenden Aufnahmevorsprüngen 18 ist ein Werkstück 12 eingelegt.

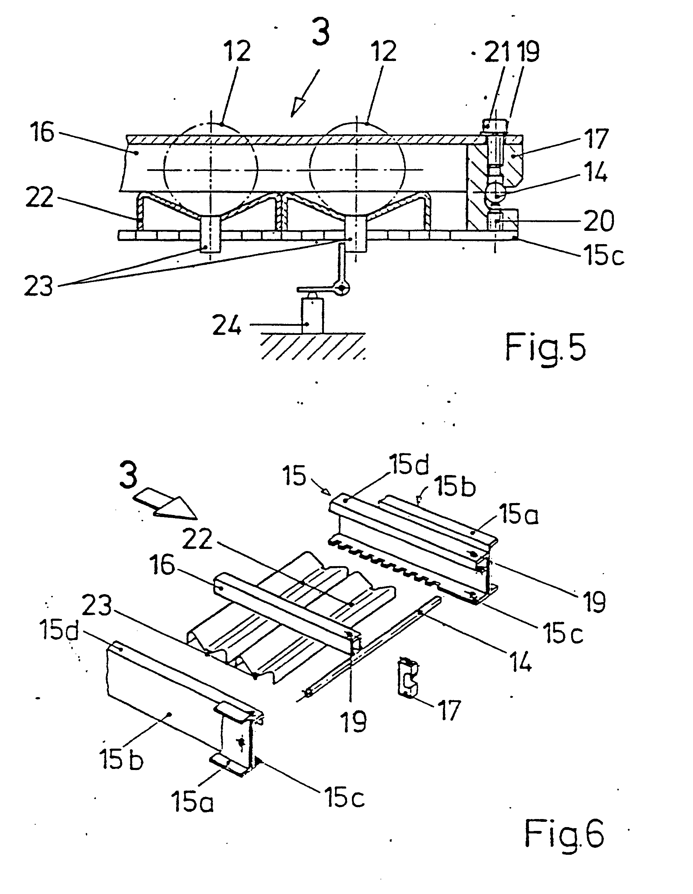

Die Aufnahmevorpsrünge 18 können nach unten verlängert sein, um einen Endschalter zu betätigen (vgl. Fig. 5), der seinerseits den Ausziehapparat der Beschickungseinrichtung ansteuert.

Die gezeigte Palette 3 ist aus einfachsten Strangteilen und Standard-Befestigungsklötzen, die ebenfalls aus Strangteilen hergestellt sein können, zusammengesetzt, wobei alle Teile als Standardteile mindestens zweifach vorgesehen sind. Es genügt mithin zum Zusammenbau von Paletten vür die Aufnahme unterschiedlichster Werkstücke eine ganz geringe Anzahl von Standardteilen, welche den Erfordernissen entsprechend zusammengebaut werden können. Wird eine Palette beschädigt, dann kann sie durch die Standardteile ohne weiteres repariert werden, oder ihre noch intakten Teile können wieder als Standardteile zur Reparatur oder zum Zusammenbau anderer Paletten herangezogen werden.

In Fig. 5 ist ein Schnitt in Ausziehrichtung durch eine weitere Ausführungsform einer Palette 3 gezeigt. Fig. 6 zeigt diese Palette in Teil-Explosionsdarstellung.

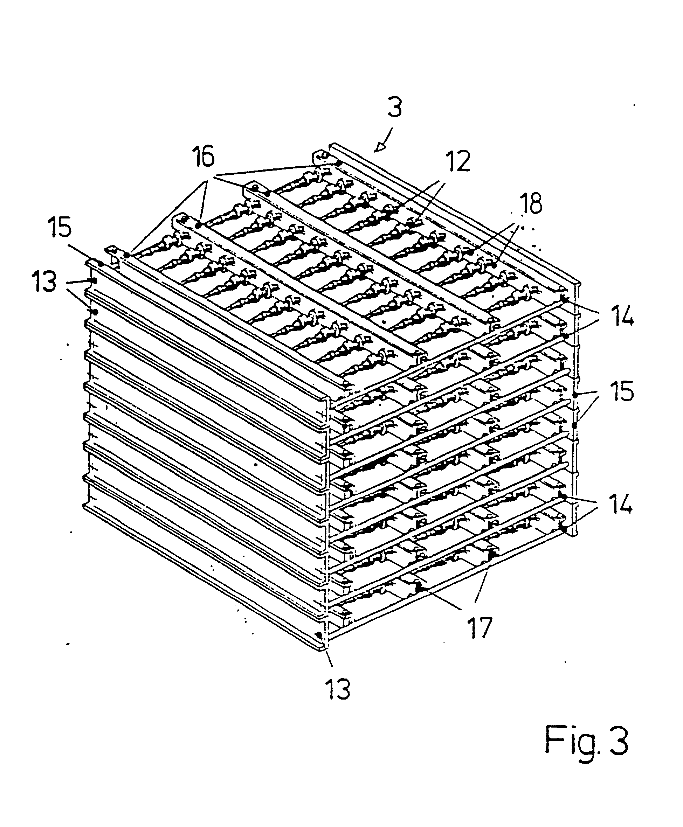

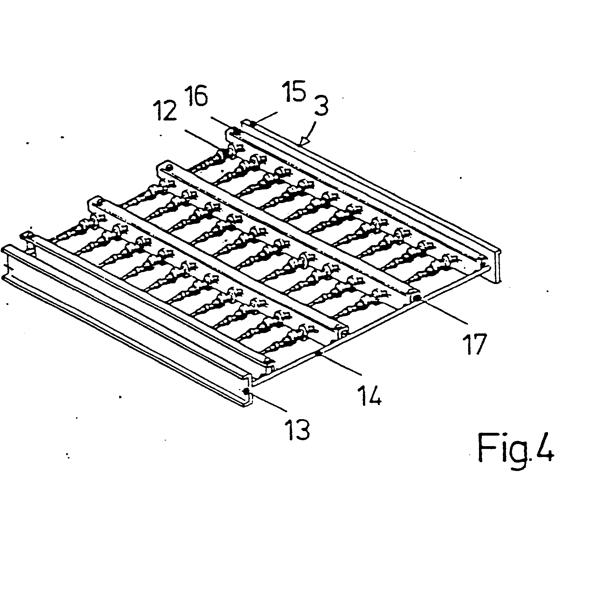

Die gezeigte Palette ist, wie auch das Ausführungsbeispiel der Fig. 3 und 4, aus zwei Längs-Profilstäben 15 gebildet, welche mit zwei querverlaufenden Befestigungsachsen 14, die als Laufrollenachsen ausgebildet sein können, miteinander verbunden sind. Die Längs-Profilstäbe 15 sind jeweils aus zwei Einzelprofilen zusammengesetzt, welche jeweils von einer äusseren Schubladenführung 15a und einer inneren Halterung 15b gebildet sind. Schubladenführungen 15a und Halterungen 15b können miteinander verschweißt sein, können aber auch mittels der Laufrollenachsen 14 zusammengehalten sein.

Die Schubladenführung 15a entspricht den Längsprofilstäben 15 der Ausführungsform der Fig. 3 und 4 und ist aus einem seitlich offenen Hohlprofil gebildet, welches an seiner Ober- und Unterseite jeweils eine horizontale Leiste bildet, die zum Stapeln der Paletten, zu deren Führung im Mobilspeicher und zum Schutz der (nicht dargestellten) Laufrollen dienen. An der Innenseite des Vertikalgurtes dieser Schubladenführung 15a ist eine Halterung 15b angesetzt. Diese Halterung ist ebenfalls von einem Profilstab gebildet, der einen vertikalen, an die Schubladenführung 15a angrenzenden Gurt aufweist, dessen Ober- und Unterseite durch einen jeweils horizontalen Vorsprung nach innen verlängert ist. Der untere horizontale Vorsprung ist als Kerbleiste 15c ausgebildet, die durch Kerben zahnstangenartig ausgebildet ist. Diese Kerben bilden Auflagen für die Vorsprünge der Werkstückaufnahmen, die später beschrieben werden.

An der Oberseite des Vertikalgurtes der Halterung 15b ist diese um ein nach innen vorspringendes, nach unten offenes Rechteckprofil 15d verlängert, welches die empfindliche Kerbleiste 15c vor Beschädigungen schützt, das Herausspringen einer Werkzeugaufnahme verhindert und eine Führung für einen Befestigungsklotz 17 bildet, der eine bogenartige Aussparung aufweist, mittels welcher er auf die Achse 14 aufsetzbar ist. Eine an der Unterseite des Befestigungsklotzes 17 angebrachte Klemmschraube 20 drückt, wie in Fig. 5 deutlich zu sehen ist, die Achse 14 in eine der Klemmschraube 20 gegenüberliegende Einbuchtung, so daß der Befestigungsklotz 17 in einer beliebigen Stellung an der Achse 14 fixierbar ist. Die Teile 15a, 15b und 15c bilden ein Profil.

An der Oberseite weist der Befestigungsklotz 17 eine Gewindebohrung auf, in welche eine Befestigungsschraube 21 eingeschraubt ist, welche durch eine Bohrung 19 in der Abdekkung 15d hindurchgeführt ist. Infolge der Formgebung der Abdeckung 15d umgreift der Längsprofilstab jeden Befestigungsklotz, welcher seinerseits auf der zugeordneten Achse 14 fixiert ist. Es wird somit aus den beiden Längsprofilstäben 15, zwei Achsen 14 und vier Befestigungsklötzen 17 ein stabiler Palettenrahmen gebildet. Die Laufrollen sind am Längsprofilstab 15 befestigt, übt aber, was den Zusammenhalt der Palette angeht, keinerlei Funktion aus.

Parallel zu den Achsen 14 erstrecken sich zwischen den Kerbleisten 15c mehrere, parallel zueinander angeordnete Werkstückaufnahmen 22, welche jeweils als Profilstab ausgebildet sind, welcher an seinen beiden Längsseiten zueinander parallele, sich vertikal erstreckende Schenkel aufweist, welche an ihrer Oberseite durch einen in der Mitte zwischen den Schenkeln vertieften Abschnitt verbunden sind. Der Profilquerschnitt entspricht etwa einem M. In der Vertiefung des oberen Abschnitts der Werkstückaufnahmen 22 ruhen Werkstücke 12.

An ihren beiden Enden weist jede Werkstückaufnahme eine in ihrer Mitte eingestanzte und nach unten gebogene Lasche 23 auf, welche zum Eingriff in Kerben der Kerbleiste 15c eingerichtet ist und im wesentlichen die gleiche Breite wie diese Kerben aufweist, so daß die Werkstückaufnahmen 22, wenn sie eingesetzt sind, ordnungsgemäß fixiert sind. Nach dem Einsetzen ruht die Werkstückaufnahme mit der Unterseite ihrer vertikalen Seitenschenkel auf der Oberfläche der Kerbleiste 15c.

Wie aus Fig. 5 ersichtlich ist, entspricht der Abstand der nach unten gebogenen Laschen 23 zweier mit ihren Schenkeln aneinanderstoßender Werkstückaufnahmen 22 genau dem Abstand zweier beliebiger Kerben in der Kerbleiste 15c, so daß die Werkstückaufnahmen 22 in gegenseitiger Berührung angebracht werden können. Im übrigen ist die Teilung der Kerbleiste 15c derart ausgebildet, daß sich eine Vielzahl von gegenseitigen Abständen zwischen zwei Werkstückaufnahmen 22 einstellen läßt, in Abhängigkeit von den Abmessungen der zu bearbeitenden Werkstücke 12.

Wie aus Fig. 5 zu sehen, überragt die Lasche 23 die Kerbleiste 15c nach unten, so daß sie in Berührung mit einem ortsfesten Endschalter 24 gelangen kann, der den Ausziehapparat ansteuert.

Auf der Oberseite der Werkstückaufnahmen 22 liegen gegebenenfalls ein oder mehrere Distanzstäbe 16 auf, die als nach unten offenes Hohlprofil derart ausgebildet sind, daß sie mit ihren Enden jeweils auf einen Befestigungsklotz 17 aufgesetzt werden können. Zur ordnungsgemäßen Befestigung weist auch die Oberseite eines jeden Distanzstabes 16 eine Bohrung 19 auf, durch welche eine Schraube hindurch in die Gewindebohrung des Befestigungsklotzes 17 eingedreht werden kann.

Der Querschnitt der Distanzstäbe 16 entspricht dem Querschnitt des die Abdeckung 15d bildenden Teiles der Längsprofilstäbe 15.

Beim Zusammenbau werden zunächst an den Enden der Längs-Profilstäbe 15 die Befestigungsklötze 17 eingesetzt und mittels der Befestigungsschrauben 21 fixiert. Dann werden die Längsprofilstäbe 15, Achsen 14 und Werkstückaufnahmen 22 zusammengesteckt, wobei die freie Unterkante der Abdeckungen 15d genau oberhalb der Oberseite der eingesetzten Werkstückaufnahmen liegt und verhindert, daß diese aus der Palette herausfallen können. Anschließend werden die Palettenteile durch Festziehen der Klemmschrauben 20 in den Befestigungsklötzen 17 zusammengespannt.

Wenn jede Werkstückaufnahme 22 mehrere nebeneinanderliegende Werkstückpositionen aufweisen soll, dann werden in entsprechendem Abstand auf die Achsen 14 Befestigungsklötze 17 aufgesetzt und festgeklemmt; zwei einander in Ausziehrichtung der Paletten gegenüberliegende Befestigungsklötze 17 werden dann durch einen aufgesetzten Distanzstab 16 verbunden, und durch deren Löcher 19 werden dann jeweils Befestigungsschrauben 21 in die Befestigungsklötze 17 eingedreht.

Es ensteht somit eine sehr leichte und infolge der Verwendung von Standardbauteilen sehr kostengünstige Palette, welche aber wegen der vielen Falze außerordentlich biegesteif ist und somit geeignet ist, Werkstücke mit einem hohen Gesamtgewicht aufzunehmen.

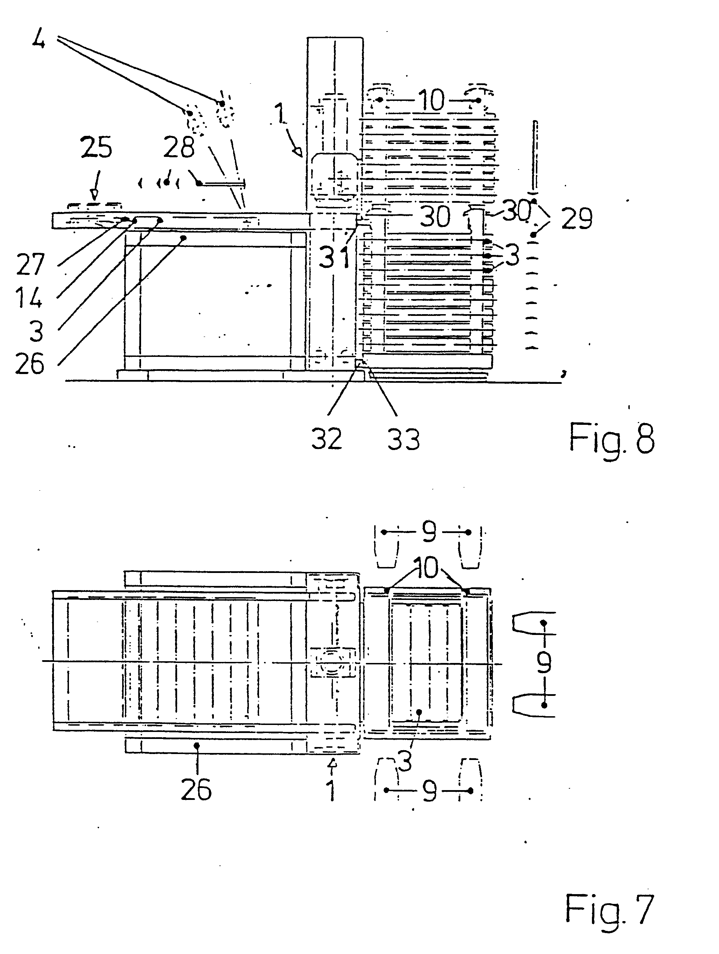

In Fig. 7 und 8 ist eine andere Ausführungsform einer Beschickungseinrichtung dargestellt.

Eine Hubeinrichtung 1 weist zwei vertikale Säulen auf, in denen Zahnstangen angeordnet sind. Eine Hubbrücke mit einem Hubantrieb läuft zwischen diesen beiden Säulen und trägt eine Halterung zur Aufnahme des Mobilspeichers 2, der an der einen Seite der beiden Säulen angeordnet ist.

An der anderen Seite der beiden Säulen ist ein Übergabetisch 26 angeordnet, der mit seiner Oberfläche die Übergabestation bildet. Der Abstand zwischen den beiden Säulen ist derart bemessen, daß vom Mobilspeicher 2 eine der dort eingeschobenen Paletten 3 in horizontaler Richtung ausgezogen werden und auf den Übergabetisch 26 überführt werden kann. Dies geschieht durch einen Ausziehapparat 25, der mittels einer Kupplung 27 an zwei Laschen angreift, die am Profil 5a der Paletten 3 rechtwinklig angebracht sind. Oberhalb des Übergabetisches 26 sind in Fig. 8 zwei Greifer 4 gezeigt, deren Bewegungsrichtungen strichpunktiert angezeigt sind und sich auf einer ausgezogenen Palette 3 an der Übergabestelle treffen. Wie die Pfeile 28 zeigen, erfolgt das Ausziehen der Palette 3 getaktet, während das Einfahren der Palette, die dann die bearbeiteten Werkstücke trägt, in einer kontinuierlichen Bewegung erfolgt.

Ferner ist in Fig. 8 durch Pfeile 29 gezeigt, daß die Hubbewegung des Mobilspeichers 2 getaktet erfolgt, während nach Bearbeitung aller in diesem enthaltenen Werkstücke dessen Absenken kontinuierlich erfolgt. Es kann die vertikale Bewegung nach oben jedoch auch kontinuierlich bis zu einem flurfreien Fördermittel weiter fortgesetzt werden.

In Fig. 7 ist der Antrieb der Hubeinrichtung 1 in mittiger Position zwischen ihren beiden Säulen angedeutet, wobei Antrieb und Getriebe als eine Einheit ausgebildet sind.

Vom Getriebe geht eine Welle aus und endet im Bereich beider Säulen, wo sie mit der genannten Zahnstange in Eingriff steht.

Wie ferner aus Fig. 7 entnehmbar ist, kann durch Flurfördermittel 9 der Mobilspeicher 2 in drei Richtungen angefahren oder abtransportiert werden.

Der Mobilspeicher 2 ist wie bei dem Ausführungsbeispiel der Fig. 1 und 2 von zwei aufeinander ausgerichteten Vertikalrahmen 10 gebildet, in denen Führungen für die schubladenartig ausziehbaren bzw. einfahrbaren Paletten 3 angeordnet sind.

Die Vertikalrahmen 10 sind über die oberste der Paletten 3 hinaus verlängert und weisen zumindest zur benachbarten Außenseite des Mobilspeichers 2 hin gerichtete Eingriffsausbildungen 30 auf, welche im Querschnitt die Form eines nach unten geöffneten Hakens aufweisen. Gegenüber der der Hubeinrichtung 1 nächstgelegenen Eingriffsausbildung 30 ist an der Hubeinrichtung 1 eine Gegenausbildung 31 angeordnet, welche im Querschnitt einem Haken entspricht, dessen Öffnung nach oben weist und der die Eingriffsausbildung 30 untergreift. An der Unterseite des Mobilspeichers 2 ist ein Anschlag 33 ausgebildet, der gegen einen der Hubbewegung folgenden Gegenanschlag 32 an der Hubeinrichtung 1 anliegt. Wenn die Hubeinrichtung 1 gegenüber der in Fig. 8 gezeigten Lage geringfügig abgesenkt ist, dann ist das Auswechseln des Mobilspeichers 2 möglich. Zu diesem Zweck wird der Mobilspeicher 2 durch Fördermittel 9 entfernt und ein neuer Mobilspeicher 2 wird herangefahren, bis dessen Anschlag 33 gegen den Gegenanschlag 32 an der Hubeinrichtung 1 anliegt. Nachfolgend wird die Hubeinrichtung 1 angehoben, wobei deren hakenartige Vorsprünge 31 die Gegenvorsprünge 30 am nächstgelegenen Vertikalrahmen 10 des Mobilspeichers 2 untergreifen und diesen dann fest mit nach oben führen. Der besondere Vorteil dieser Einrichtung besteht darin, daß die gesamte, zur Verfügung stehende Höhe bis zum Boden für die Höhe des Mobilspeichers genutzt werden kann, ohne daß es erforderlich ist, einen Raum für eine den Mobilspeicher untergreifende Hubplattform oder dergleichen zu berücksichtigen.

Ferner nimmt die Hubeinrichtung in der den Mobilspeicher 2 zugewandten Seite kaum Raum ein, so daß bei nicht eingesetztem Hubspeicher keine besonderen Sicherungsvorkehrungen erforderlich sind. Es ist auch möglich, die (in Fig. 7 und 8 nicht gezeigte) Bearbeitungsmaschine kurzzeitig mit Einzelpaletten 3 zu beschicken, wenn die Kapazität des Mobilspeichers 2 im Sonderfall nicht lohnend nutzbar ist.

In den Unteransprüchen 7 bis 11 sowie 13 und 14 sind spezielle Ausgestaltungen der Erfindung angegeben, deren Vorteile in der Beschreibungseinleitung erläutert sind.

## Patentansprüche

1. Werkstück-Beschickungseinrichtung für Bearbeitungsmaschinen mit den folgenden Merkmalen:.
- ein transportabler Mobilspeicher (2) mit übereinanderliegenden, jeweils horizontal aus- und einfahrbaren Paletten (3), die mit Werkstückaufnahmen (22) versehen sind,
- ein Ausziehapparat (25) zum Ergreifen sowie Aus- und Einfahren jeweils einer Palette (3) aus dem bzw. in den Mobilspeicher (2),
eine ortsfeste Übergabestation (26), an welcher jeweils eine Palette (3) in horizontaler Richtung taktweise an einer Übergabestelle vorbei derart bewegbar ist, daß sich bei Stillstand der Palette (3) zwischen zwei Bewegungstakten jeweils eine Werkstückaufnahme (22) an der Übergabestelle befindet, und
- ein Ladegerät (4,5,7) zum Ergreifen und Aufnehmen jeweils eines Werkstücks (12) aus der an der übergabestelle stillstehenden Werkstückaufnahme (22), zum Umsetzen des Werkstücks (12) zur Bearbeitungsmaschine (8), zum Entnehmen eines bearbeiteten Werkstücks (12) aus dieser und zum Absetzen dieses Werkstücks in die Werkstückaufnahme (22),
dadurch gekennzeichnet, daß
- eine Hubeinrichtung (1) mit einer Aufnahme für den Mobilspeicher (2) zu dessen taktweisem Anheben über eine Mindesthubstrecke vorgesehen ist, die dem Abstand zwischen der obersten und untersten Palette (3) des Mobilspeichers (2) entspricht,
- die Übergabestation mit der Übergabestelle in Ausfahrrichtung der Paletten (3) neben dem Mobilspeicher (2) in einer solchen Höhe vorgesehen ist, daß bei dessen Vertikalbewegung zwischen zwei Bewegungstakten jede der Paletten (3) unmittelbar auf die Übergabestation ausfahrbar ist, und
- der Ausziehapparat (25) zum getakteten Aus- oder Einfahren der Palette an der Übergabestelle vorbei eingerichtet ist.

2. Einrichtung nach Anspruch 1, dadurch gekennzeichnet, daß der Mobilspeicher (2) in die Aufnahme der Hubeinrichtung (1) einhängbar ist.

3. Einrichtung nach einem der Ansprüche 1 oder 2, dadurch gekennzeichnet, daß die Hubeinrichtung (1) zu einer Vertikalbewegung des Mobilspeichers (2) eingerichtet ist, die größer ist als die Mindesthubstrecke und bis an die Umsetzstation eines Förderers zum Heranbringen und Fortschaffen des Mobilspeichers (2) heranreicht.

4. Einrichtung nach einem der Ansprüche 1 bis 3, dadurch gekennzeichnet, daß die Hubeinrichtung (1) zur getakteten Vertikalbewegung in nur einer Richtung und nur innerhalb der Mindesthubstrecke eingerichtet ist.

5. Einrichtung nach Anspruch 4, dadurch gekennzeichnet, daß die Hubeinrichtung (1) zur getakteten Vertikalbewegung nur in Aufwärtsrichtung eingerichtet ist.

6. Einrichtung nach einem der Ansprüche 1 bis 5, dadurch gekennzeichnet, daß der Mobilspeicher (2) eine Steuereinrichtung zum Ansteuern der Hubeinrichtung (1) aufweist.

7. Einrichtung nach Anspruch 6, dadurch gekennzeichnet, daß die Steuereinrichtung ein an jeder Palette (3) jeweils angeordnetes, erstes Steuerglied zum Ansteuern der Hubeinrichtung (1) aufweist.

8. Einrichtung nach Anspruch 7, dadurch gekennzeichnet, daß das erste Steuerglied ein auf einen ortsfesten Steuerschalter einwirkender, an jeder Palette (3) angebrachter Vorsprung ist.

9. Einrichtung nach einem der Ansprüche 1 bis 7, dadurch gekennzeichnet, daß der Mobilspeicher (2) für jede Palette (3) eine durch den Ausziehapparat (25) lösbare Ausziehsperre aufweist.

10. Einrichtung nach Anspruch 9, dadurch gekennzeichnet, daß die Ausziehsperre als eine durch die Ausziehkraft des Ausziehapparates (25) überwindbare Rasteinrichtung ausgebildet ist.

11. Einrichtung nach einem der Ansprüche 1 bis 10, dadurch gekennzeichnet, daß jeder Palette (3) eine Einrichtung zum Ansteuern des Ausziehapparates zugeordnet ist.

12. Einrichtung nach Anspruch 11, dadurch gekennzeichnet, daß an jeder Palette (3) zweite, insbesondere als Laschen (23) ausgebildete, Steuerglieder jeweils in Zuordnung zu den Werkstückaufnahmen (22) angeordnet sind, die auf eine ortsfeste, insbesondere als Endschalter (24) ausgebildete Einrichtung zum Ansteuern des Ausziehapparates (25) einwirken.

13. Einrichtung nach Anspruch 12, dadurch gekennzeichnet, daß das Steuerglied, das jeweils einer nicht durch ein Werkstück (12) besetzten Werkstückaufnahme (18; 22) zugeordnet ist, unwirksam ist.

14. Einrichtung nach einem der Ansprüche 1 bis 13, dadurch gekennzeichnet, daß der Ausziehapparat (25) nur während der Ausziehbewegung getaktet ansteuerbar ist.

15. Einrichtung nach einem der Ansprüche 1 bis 14, dadurch gekennzeichnet, daß die Palette (3) mit Laufrollen versehen ist, die in Führungen (11) des Mobilspeichers (2) aufgenommen sind.

16. Einrichtung nach Anspruch 15, dadurch gekennzeichnet, daß die Paletten (3) quadratischen Grundriß aufweisen, und daß an allen Rändern der Paletten die Laufrollen derart angeordnet sind, daß das Aus- und Einfahren der Paletten (3) beim Mobilspeicher (2) in beiden Längsrichtungen der Paletten (3) möglich ist.

17. Einrichtung nach einem der Ansprüche 15 oder 16, dadurch gekennzeichnet, daß die Paletten (3) beiderseits einen tragenden Längs-Profilstab (15) aufweisen, und daß an diesen Längs-Profilstäben sich quer zu diesen erstreckende Werkzeugaufnahmen (18, 22) lösbar befestigt sind.

18. Einrichtung nach Anspruch 17, dadurch gekennzeichnet, daß die Längs-Profilstäbe (15) an ihren einander zugewandten Seiten jeweils eine mit einer Reihe von Positionierungskerben versehene Kerbleiste (15c) zum Einsetzen der Werkzeugaufnahmen (22) aufweisen, und daß die Werkzeugaufnahmen an jedem Ende eine Lasche (23) zum Eingriff in je eine der Positionierungskerben aufweisen.

19. Einrichtung nach Anspruch 18, dadurch gekennzeichnet, daß die Lasche (23) zum Eingriff in die Positionierungskerben verlängert ist und zum Eingriff mit dem Endschalter (24) zum Ansteuern des Ausziehapparates (25) eingerichtet ist.

20. Einrichtung nach einem der Ansprüche 18 oder 19, dadurch gekennzeichnet, daß die Werkzeugaufnahme als nach oben offenes Winkelprofil (22) ausgebildet ist, dessen Flanken zur Auflage auf den Längs-Profilstäben (15) umgebogen sind.

21. Einrichtung nach einem der Ansprüche 1 bis 20, dadurch gekennzeichnet, daß die Werkzeugaufnahmen (22) jeweils zur Aufnahme mehrerer Stücke (12) an nebeneinanderliegenden Werkstückpositionen eingerichtet sind, und daß das Ladegerät (4, 5, 7) zum jeweils einzelnen Aufnehmen und Absetzen mehrerer, an der Übergabestelle nebeneinanderliegender Werkstücke (12) eingerichtet ist.

22. Einrichtung nach Anspruch 21, dadurch gekennzeichnet, daß die Werkstückpositionen voneinander durch längs der Palette (3) angeordnete Distanzstäbe (16) getrennt sind, die auf den Werkstückaufnahmen (22) aufliegen und an den durchgehenden Achsen (14) der Laufrollen befestigt sind.

23. Einrichtung nach Anspruch 17, dadurch gekennzeichnet, daß Distanzstäbe (16) an den Achsen (14) angebracht sind, und daß an den einander zugewandten Seitenflanken der Distanzstäbe Vorsprünge (18) zur Aufnahme der Werkstücke (12) ausgebildet sind.

24. Einrichtung nach Anspruch 22 oder 23, gekennzeichnet durch an den Achsen (14) anbringbare Befestigungsklötze (17), an denen die Längs-Profilstäbe (15) und die Distanzstäbe (16) anbringbar sind.

25. Einrichtung nach einem der Ansprüche 1 bis 24, dadurch gekennzeichnet, daß der Mobilspeicher (2) zwei aufeinander ausgerichtete Vertikalrahmen (10) aufweist, die Horizontalführungen (11) für die Paletten (33) aufweisen, und daß an der Oberseite der Vertikalrahmen (10) Eingriffsausbildungen (30) vorgesehen sind, und daß an der Hubeinrichtung (1) Gegenvorsprünge (81) zur Aufnahme des Mobilspeichers eingerichtet sind.

**Claims**

1. A workpiece feeding means for processing machines, having the following features:

- a portable mobile magazine (2) with pallets (3) disposed one above the other, each capable of being moved out and in horizontally and provided with workpiece receptacles (22),

- a withdrawing apparatus (25) for grasping and moving one pallet (3) in each case out of or into the mobile magazine (2),

- a stationary transfer unit (26) at which one pallet (3) in each case can be moved past a transfer point in the horizontal direction in fixed cycles in such a way that when the pallet (3) stands still between two periods of movement one workpiece receptacle (22) is located at the transfer point, and

- a loading device (4, 5, 7) for grasping and picking up one workpiece (12) at a time from the workpiece receptacle (22) standing still at the transfer point, for transfering the workpiece (12) to the processing machine (8), for removing a processed workpiece (12) therefrom and for depositing this workpiece in the workpiece receptacle (22),

characterized in that

- a lifting means (1) is provided having a receptacle for the mobile magazine (2) for lifting it in fixed cycles over a minimum lifting path which corresponds to the distance between the uppermost and lowermost pallets (3) in the mobile magazine (2),

- the transfer unit is provided with the transfer point in the moving-out direction of the pallets (3) beside the mobile magazine (2) at a height such that during its vertical movement each of the pallets (3) can be moved out directly to the transfer unit between two periods of movement, and

- the withdrawing apparatus (25) is designed to move the pallet out or in past the transfer point in fixed cycles.

2. The means according to claim 1, characterized in that the mobile magazine (2) can be suspended in the receptacle for the lifting means (1).

3. The means according to either of claims 1 or 2, characterized in that the lifting means (1) is designed for a vertical movement of the mobile magazine (2) which is larger than the minimum lifting path and extends as far as the transfer unit of a conveyer for bringing and carrying away the mobile magazine (2).

4. The means according to any of claims 1 to 3, characterized in that the lifting means (1) is designed for vertical movement in fixed cycles in only one direction and only within the minimum lifting path.

5. The means according to claim 4, characterized in that the lifting means (1) is designed for vertical movement in fixed cycles only in the upward direction.

6. The means according to any of claims 1 to 5, characterized in that the mobile magazine (2) has a control means for controlling the lifting means (1).

7. The means according to claim 6, characterized in that the control means has a first control member disposed on each pallet (3) for controlling the lifting means (1).

8. The means according to claim 7, characterized in that the first control member is a projection provided on each pallet (3) and acting on a stationary control switch.

9. The means according to any of claims 1 to 7, characterized in that the mobile magazine (2) has for each pallet (3) a withdrawal catch which can be released by the withdrawing apparatus (2.).

10. The means according to claim 9, characterized in that the withdrawal catch is designed as a locking means which can be overcome by the withdrawing force of the withdrawing apparatus (2.).

11. The means according to any of claims 1 to 10, characterized in that a means for controlling the withdrawing apparatus is assigned to each pallet (3).

12. The means according to claim 11, characterized in that second control members, designed in particular as flaps (23), are disposed on each pallet (3) so as to be each assigned to the workpiece receptacles (22) and act on a stationary means, designed in particular as a limit switch (24), for controlling the withdrawing apparatus (25).

13. The means according to claim 12, characterized in that the control member assigned in a particular case to a workpiece receptacle (18;22) not occupied by a workpiece (12) is ineffective.

14. The means according to any of claims 1 to 13, characterized in that the withdrawing apparatus (25) can be controlled in fixed cycles only during the withdrawing movement.

15. The means according to any of claims 1 to 14, characterized in that the pallet (3) is provided with rollers which are taken up in guideways (11) in the mobile magazine (2).

16. The means according to claim 15, characterized in that the pallets (3) are square in plan form and in that the rollers are disposed on all edges of the pallets in such a way that it is possible to move the pallets (3) out of and into the mobile magazine (2) in both longitudinal directions of the pallets (3).

17. The means according to either of claims 15 or 16, characterized in that the pallets (3) have on both sides a bearing longitudinal profile rod (15), and in that workpiece receptacles (18, 22) extending perpendicular to these longitudinal profile rods are mounted detachably thereto.

18. The means according to claim 17, characterized in that the longitudinal profile rods (15) have on their sides facing each other in each case a notched strip (15c) provided with a row of positioning notches for inserting the workpiece receptacles (22), and in that the workpiece receptacles have at each end a flap (23) for engaging one of the positioning notches in each case.

19. The means according to claim 18, characterized in that the flap (23) is prolonged to engage the positioning notches and is designed to engage the limit switch (24) for controlling the withdrawing apparatus (25).

20. The means according to either of claims 18 or 19, characterized in that the workpiece receptacle is designed as an upwardly open angle section (22) whose flanks are bent to lie against the longitudinal profile rods (15)

21. The means according to any of claims 1 to 20, characterized in that the workpiece receptacles (22) are each designed to take up several pieces (12) at workpiece positions located beside each other, and in that the loading device (4, 5, 7) is designed to singly pick up and deposit several workpieces (12) located beside each other at the transfer point.

22. The means according to claim 21, characterized in that the workpiece positions are separated from each other by distance rods (16) disposed along the pallet (3) which lie against the workpiece receptacles (22) and are mounted on the passing axles (14) of the rollers.

23. The means according to claim 17, characterized in that distance rods (16) are provided on the axles (14), and in that projections (18) for taking up the workpieces (12) are formed on the side flanks facing each other of the distance rods.

24. The msans according to claim 22 or 23, characterized by mounting blocks (17) to be provided on the axles (14), on which the longitudinal profile rods (15) and the distance rods (16) can be provided.

25. The means according to any of claims 1 to 24, characterized in that the mobile magazine (2) has two vertical frames (10) aligned with each other and having horizontal guideways (11) for the pallets (33), and in that engagement formations (30) are provided on the upper sides of the vertical frames (10), and in that counterprojections (31) are designed on the lifting means (1) for taking up the mobile magazine.


**Revendications**

1. Dispositif d'alimentation de pièces pour machine d'usinage ayant les caractéristiques suivantes:
   - un magasin mobile transportable (2) avec des palettes superposées mobiles horizontalement pour introduction et extraction, qui sont prévues avec des logements de pièces (22),
   - un appareil d'extraction (25) pour saisir, extraire et insérer une palette (3) dans ou de ce magasin mobile (2),
   - une station de transfert fixe (26) où une palette (3) est mobile pas-à-pas selon une direction horizontale en un point de transfert tel que, pour la position d'arrêt de la palette (3) entre deux pas de déplacement, un logement de pièces (22) se trouve au point de transfert, et
   - un dispositif de chargement (4, 5, 7) pour saisir et liberer une pièce (12) hors du logement de pièces (22) se trouvant a l'arrêt au point de transfert pour amener cette pièce (12) à la machine d'usinage (8), pour enlever une pièce usinée (12) de celle-ci et pour déposer cette pièce dans le logement de pièce (22), caractérisé en ce que,
   - un dispositif de levage (1) avec un logement pour le magasin mobile (2) est prévu pour élever pas-à-pas celui-ci au-delà d'une course de levage minimale qui correspond à la distance entre la palette la plus élevée et la palette la plus basse (3) du magasin mobile (2),
   - le poste de transvert avec le point de transfert dans la direction d'extraction de la palette (3) est prévu à côté du magasin mobile (2) à une hauteur telle que, pour un déplacement vertical de celui-ci entre deux pas de mouvement, chacune des palettes (3) est directement extractible au poste de transfert, et
   - le dispositif d'extraction (25) pour l'extraction ou l'introduction pas-à-pas de la palette est disposé au point de transfert.

2.- Dispositif selon la revendication 1, caractérisé en ce que le magasin mobile (2) est susceptible d'être accroché dans le logement du dispositif de levage (1).

3.- Dispositif selon l'une des revendications 1 ou 2, caractérisé en ce que le dispositif de levage (1) est adapte à un déplacement vertical du magasin mobile (2) qui est superieur à la course de levage minimale et qui atteint, au poste d'amenée, un convoyeur pour amener et enlever le magasin mobile (2).

4.- Dispositif selon l'une des revendications 1 à 3, caractérisé en ce que le dispositif de levage (1) est prevu pour un deplacement vertical pas-à-pas dans une direction seulement, et seulement à l'interieur de la course de levage minimale.

5.- Dispositif selon la revendication 4, caractérisé en ce que le dispositif de levage (1) est prevu pour un déplacement vertical pas-à-pas uniquement dans la direction d'eloignement.

6.- Dispositif selon l'une des revendications 1 à 5, caractérisé en ce que le magasin mobile (2) comporte un dispositif de commande pour la commande du dispositif de levage.

7.- Dispositif selon la revendication 6, caractérisé en ce que le dispositif de commande comporte un premier organe de commande dispose sur chaque palette pour la commande du dispositif de levage (1).

8.- Dispositif selon la revendication 7, caractérisé en ce que le premier organe de commande est une saillie disposée sur chaque palette (3) et agissant sur un interrupteur de commande fixe.

9. Dispositif selon l'une des revendications 1 à 7, caractérisé en ce que le magasin mobile (2) comporte pour chaque palette (3) un verrou d'extraction liberable par l'appareil d'extraction (25).

10. Dispositif selon la revendication 9, caractérisé en ce que le verrou d'extraction est formé par un dispositif à crans qui peuvent être franchis par l'action de la force d'extraction du dispositif d'extraction (25).

11.- Dispositif selon l'une des revendications 1 à 10, caractérisé en ce qu'à chaque palette est associe un dispositif pour la commande de l'appareil d'extraction.

12.- Dispositif selon la revendication 11, caractérisé en ce qu'à chaque palette (3) est associé un deuxième organe de commande ayant la forme d'une patte (23) en correspondance avec le logement de pièces (22), qui agit sur un dispositif de commande de l'appareil d'extraction (25), en particulier un interrupteur de fin de course (24).

13.- Dispositif selon la revendication 12, caractérisé en ce que l'organe de commande qui est dispose à un logement de pièces (18, 22) non occupé par une pièce (12), est inactif.

14.- Dispositif selon l'une des revendications 1 à 13, caractérisé en ce que l'appareil d'extraction (25) n'est susceptible d'être commandé pas-à-pas que pendant le mouvement d'extraction.

15.- Dispositif selon l'une des revendications 1 à 14, caractérisé en ce que la palette (3) est munie de galets de roulement qui sont reçus dans des guides (11) du magasin mobile (2).

16.- Dispositif selon la revendication 15, caractérisé en ce que la palette (3) est rectangulaire en plan et en ce que, sur tous les bords de la palette, les galets de roulement sont disposés de telle manière que l'extraction ou l'introduction de la palette (3) dans le magasin mobile (2) soit possible dans les deux directions longitudinales de la palette (3).

17.- Dispositif selon l'une des revendications 15 ou 16, caractérisé en ce que la palette (3) comporte sur deux côtés un profilé longitudinal (15) de support et en ce que des logements de pièces (16, 22), s'étendant perpendiculairement à ces profilés longitudinaux, sont fixés de manière amovible à ceux-ci.

18.- Dispositif selon la revendication 17, caractérisé en ce que les profilés longitudinaux (15) sont munis sur leurs faces en regard d'un listel encoché (15c) comportant une série d'encoches de positionnement pour l'ajustage des logements de pièces (22) et en ce que les logements de pièces comportent, à chacune de leurs extrémites, une patte (23) destinée à s'engager dans l'une des encoches de positionnement.

19.- Dispositif selon la revendication 18, caractérisé en ce que la patte (23) est prolongée pour l'engagement dans les encoches de positionnement et est adaptée à entrer en contact avec l'interrupteur de fin de course (24) pour la commande de l'appareil d'extraction (25).

20.- Dispositif selon l'une des revendications 18 ou 19, caractérisé en ce que le logement de pièces est formé par une cornière (22) ouverte vers le haut et dont les ailes sont recourbées pour reposer sur les profilés longitudinaux (15).

21.- Dispositif selon l'une des revendications 1 à 20, caractérisé en ce que les logements de pièces (22) sont adaptés à la reception de plusieurs pièces (12) occupant des positions de pièces côte à côte et en ce que le dispositif de chargement (4, 5, 7) est adapté à la pose et à l'enlevement au point de transfert de plusieurs pièces (12) disposées côte à côte.

22.- Dispositif selon la revendication 21, caractérisé en ce que les positions de pièces sont separées les unes des autres par des entretoises (16) disposées selon la longueur de la palette (3), qui reposent sur les logements de pièces (22) et qui sont fixées aux axes (14) des galets de roulement.

23.- Dispositif selon la revendication 17, caractérisé en ce que les entretoises (16) sont rapportées sur les axes (14) et en ce que, sur les faces latérales en regard des entretoises, sont formées des saillies (18) pour la reception des pièces (12).

24.- Dispositif selon la revendication 22 ou 23. caractérisé par des tasseaux de fixation (17) aptes à être fixés aux axes (14) auxquels peuvent être fixés les profilés longitudinavx (15) et les entretoises (16).

25.- Dispositif selon l'une des revendications 1 à 24, caractérisé en ce que le magasin mobile (2) comporte deux cadres verticaux (10) espaces l'un de l'autre et qui portent des guides horizontaux (11) pour les palettes (33) et en ce que, sur la face supérieure des cadres verticaux (10), sont prévues des saillies de préhension (30) et en ce que, sur le dispositif de levage (1), sont réalisées des saillies antagonistes (31) pour la réception du magasin mobile.

Fig.1

Fig 2

Fig. 3

Fig. 4

Fig.5

Fig.6

Fig. 8

Fig. 7